# EUROPÄISCHE PATENTANMELDUNG

(11) **EP 1 116 439 A1**
(43) Veröffentlichungstag der Anmeldung: **18.07.2001**
(21) Anmeldenummer: 01100028.8
(22) Anmeldetag: 05.01.2001
(51) Int. Cl.: A01N 47/32

(54) **Verwendung eines Phenylharnstoff-Derivates zur Bekämpfung der Späten Rübenfäule**

(30) Priorität: 17.01.2000 DE 10001589
(71) Anmelder: Bayer Aktiengesellschaft, 51368 Leverkusen (DE)
(72) Erfinder: Dehne, Heinz-Wilhelm, Prof. Dr., 53125 Bonn (DE); Zens, Irene, Dr., 53881 Euskirchen (DE); Mauler-Machnik, Astrid, Dr., 42799 Leichlingen (DE)

(57) **Zusammenfassung**

N-4-Chlorbenzyl-N-cyclopentyl-N'-phenyl-harnstoff der Formel 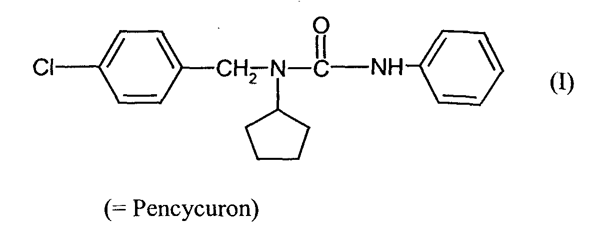 eignet sich sehr gut zur Bekämpfung der Späten Rübenfäule.

## Beschreibung

Die vorliegende Erfindung betrifft die neue Verwendung eines bekannten Phenylharnstoff-Derivates gegen die späte Rübenfäule.

Seit einigen Jahren tritt die Späte Rübenfäule epidemieartig auf und verursacht häufig starke Schäden an Rübengewächsen. Bisher sind aber noch keine Wirkstoffe bekannt, mit deren Hilfe sich diese Pflanzenkrankheit in ausreichendem Maße bekämpfen lässt.

Es ist bereits bekannt, dass N-4-Chlor-benzyl-N-cyclopentyl-N'-phenylharnstoff (= Pencycuron) eine fungizide Wirksamkeit besitzt und gegen verschiedene Pflanzenkrankheiten eingesetzt werden kann (vgl. DE-A 27 32 257).

Weiterhin ist schon bekannt, dass sich Azoxystrobin und auch Hymexazol zur Bekämpfung von zahlreichen Pilzinfektionen bei Pflanzen verwenden lassen (vgl. Pesticide Manual, 11 th. Edition (1997), Seiten 70-72 und 689-690).

Es wurde nun gefunden, dass sich N-4-Chlorbenzyl-N-cyclopentyl-N'-phenyl-harnstoff der Formel 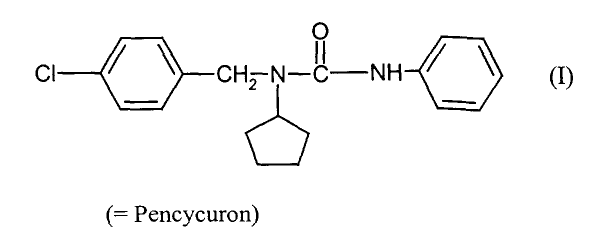 sehr gut zur Bekämpfung der Späten Rübenfäule verwenden lässt.

Es ist als äußerst überraschend zu bezeichnen, dass N-4-Chlorbenzyl-N-cyclopentyl-N'-phenyl-harnstoff der Formel (I) zum Schutz von Pflanzen gegen Befall durch Späte Rübenfäule geeignet ist, denn bisher sind noch keine Wirkstoffe beschrieben worden, die zu diesem Zweck eingesetzt werden können und eine ausreichende Bekämpfung dieser Krankheit ermöglichen.

Der Wirkstoff der Formel (I) ist bereits bekannt (vgl. DE-A 27 32 257).

Der Wirkstoff der Formel (I) eignet sich sehr gut zur Bekämpfung der Späten Rübenfäule bei Rübengewächsen, wie Zuckerrüben, Futterrüben und Rote Beete.

Bei der Späten Rübenfäule handelt es sich nun um eine spezielle Variante der Pflanzenkrankheit Rhizoctonia solani; und zwar um Rhizoctonia solani AG 2-2 (Anastomosengruppe 2-2).

Die gute Pflanzenverträglichkeit des erfindungsgemäß verwendbaren Wirkstoffes erlaubt eine Behandlung von oberirdischen Pflanzenteilen, von Pflanz- und Saatgut und des Bodens. Insbesondere kann der Wirkstoff der Formel (I) zur protektiven Bekämpfung der Späten Rübenfäule eingesetzt werden.

Der erfindungsgemäß verwendbare Wirkstoff kann in die üblichen Formulierungen überführt werden. Der Einsatz erfolgt dann durch Ausbringen dieser Formulierungen oder den daraus bereiteten Anwendungsformen, wie gebrauchsfertige Lösungen, Suspensionen, Spritzpulver, Pasten, lösliche Pulver, und Granulate. Die Anwendung geschieht in üblicher Weise, z.B. durch Gießen, Verspritzen, Versprühen, Verstreuen, Verstäuben, Verschäumen, Bestreichen usw.. Es ist ferner möglich, die Wirkstoffzubereitung in den Boden einzuarbeiten. Mit besonderem Vorteil kann auch das Saatgut der Pflanzen behandelt werden.

Beim Einsatz des erfindungsgemäß verwendbaren Wirkstoffes gegen die Späte Rübenfäule können die Aufwandmengen je nach Applikationsart innerhalb eines größeren Bereiches variiert werden. Bei der Behandlung von Pflanzenteilen liegen die Aufwandmengen an Wirkstoff im allgemeinen zwischen 0,1 und 10.000 g/ha, vorzugsweise zwischen 10 und 1.000 g/ha. Bei der Saatgutbehandlung liegen die Aufwandmengen an Wirkstoff im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im allgemeinen zwischen 0,1 und 10.000 g/ha, vorzugsweise zwischen 1 und 5.000 g/ha.

Die Erfindung wird durch die folgenden Beispiele veranschaulicht.

### Beispiel 1

### Wuchshemmung von Rhizoctonia solani AG 2-2 (Anastomosengruppe 2-2) / protektiv

Die Prüfung der Substanzen hinsichtlich ihrer Wirksamkeit gegen Rhizoctonia solani AG 2-2 wird auf geeigneten Nährmedien durchgeführt. Zu diesem Zweck werden die Wirkstoffe in der jeweils angegebenen Menge in die jeweils angegebene Menge an Nährmedium gegeben und mit diesem intensiv vermischt. Nach Überführung des jeweiligen Gemisches in ein Kulturgefäß wird mit Rhizoctonia solani AG 2-2 beimpft und bei geeigneter Temperatur inkubiert. In bestimmten Zeitabständen wird das Wachstum des Mikroorganismus beurteilt.

Es wird ein Nährmedium der folgenden Zusammensetzung verwendet:

| | | |
|---|---|---|
| 39 | Gewichtsteile | Kartoffelglukoseagar |
| 9 | Gewichtsteile | Agar-Agar |
| 10 | Gewichtsteile | Pepton |
| 5 | Gewichtsteile | Malz |

Diese Bestandteile werden in 1000 ml destilliertem Wasser gelöst und für 30 Minuten bei 121°C autoklaviert. Dem Nährmedium wird der Wirkstoff in der jeweils angegebenen Konzentration zugemischt. Lösungsmittel und Nährmedium stehen jedoch in allen Fällen in folgendem Gewichtsverhältnis zueinander:

| | | |
|---|---|---|
| 2 | Gewichtsteile | Lösungsmittel |
| 100 | Gewichtsteile | Nährmedium |

Diese Mischungen werden in Petrischalen mit einem Durchmesser von 9 cm und einem Volumen von 10 ml ausgegossen. Nachdem der Nährboden erkaltet und verfestigt ist, wird er im Zentrum der Petrischale mit einem Impfstück von 0,5 cm Durchmesser beimpft.

Die Auswertung erfolgt - der Wachstumsgeschwindigkeit des Mikroorganismus entsprechend - nach 2 bis 14 Tagen. Die Beeinflussung der Kulturentwicklung wird aus einem Vergleich der einzelnen Versuchsglieder ermittelt. Dabei bedeutet 0 % einen Wirkungsgrad, der dem der unbehandelten Versuchsvariante entspricht. Der Wirkungsgrad von 100 % bedeutet hingegen eine vollständige Wachstumshemmung des Pilzes. Der Wirkungsgrad der fungiziden Wirkstoffe wird daher in Relation zum Wachstum der unbehandelten Versuchsvarianten (= Kontrolle) nachgewiesen.

Wirkstoffe, Aufwandmengen und Versuchsergebnisse gehen aus der folgenden Tabelle hervor.

**Tabelle 1**

| Wuchshemmung von Rhizoctonia solani AG 2-2 / protektiv | | |
|---|---|---|
| Wirkstoff | Aufwandmenge an Wirkstoff in ppm | Wirkungsgrad in % |
| - (Kontrolle) | 0 | 0 |

| Erfindungsgemäß: | | |
|---|---|---|
| Pencycuron | 0,1 | 70 |
| | 1 | 98 |
| | 10 | 100 |
| | 100 | 100 |

| Vergleichssubstanzen: | | |
|---|---|---|
| Azoxystrobin | 0,1 | 45 |
| | 1 | 48 |
| | 10 | 59 |
| | 100 | 64 |
| Hymexazol | 0,1 | 7 |
| | 1 | 5 |
| | 10 | 8 |
| | 100 | 35 |

## Patentansprüche

1. Verwendung von N-4-Chlorbenzyl-N-cyclopentyl-N'-phenyl-harnstoff der Formel 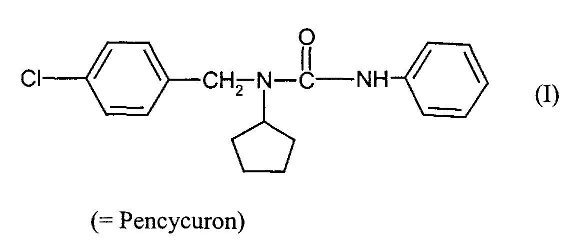 zur Bekämpfung der Späten Rübenfäule.
